# EUROPÄISCHE PATENTSCHRIFT

(11) **EP 2 470 341 B1**
(45) Veröffentlichungstag und Bekanntmachung des Hinweises auf die Patenterteilung: **14.09.2016**
(21) Anmeldenummer: 10754862.0
(22) Anmeldetag: 27.08.2010
(51) Int. Cl.: B29C 43/18, B29C 43/34, B29C 31/04

(54) **VERFAHREN UND VORRICHTUNG ZUM AUFBRINGEN EINER DICHTUNGSMASSE AUF EINE FLÄCHE**
METHOD AND DEVICE FOR APPLYING A SEALING COMPOUND TO A SURFACE
PROCÉDÉ ET DISPOSITIF PERMETTANT D'APPLIQUER UNE MASSE D'ÉTANCHÉITÉ SUR UNE SURFACE

(30) Priorität: 28.08.2009 DE 102009040802
(43) Veröffentlichungstag der Anmeldung: 04.07.2012
(73) Patentinhaber: Saeta GmbH & Co. KG, 22880 Wedel (DE)
(72) Erfinder: HAAR, Thomas, 25469 Halstenbek (DE)
(74) Vertreter: Hauck Patentanwaltspartnerschaft mbB
(86) Internationale Anmeldenummer: PCT/EP2010/005276
(87) Internationale Veröffentlichungsnummer: WO 2011/023399

(56) Entgegenhaltungen:
- EP-A1- 0 462 513
- EP-A1- 0 499 108
- EP-A1- 1 527 864
- US-A- 4 388 058

## Beschreibung

Die Erfindung bezieht sich auf ein Verfahren zum Aufbringen einer Dichtungsmasse auf eine Fläche, vorzugsweise in eine Verschlusskappe für Behälter nach Patentanspruch 1. Die Erfindung bezieht sich außerdem auf eine Vorrichtung zur Durchführung des Verfahrens nach Patentanspruch 8.

Verschlusskappen für Behälter, Gläser oder dergleichen Behälter weisen im Inneren des Bodens zumeist eine Dichtung auf, um den Behälterinhalt ausreichend gegenüber der Atmosphäre abzudichten.

Es ist bekannt, derartige Dichtungen in Form von Dichtungsmasse einzubringen, vorzugsweise in Ringform. Es ist bekannt, als Material hierfür PVC zu verwenden, das aus verfahrenstechnischen Gründen und zu Dichtungszwecken mit einem Weichmacher versehen ist. Weichmacher haben jedoch die Eigenschaft, zu einem gewissen Anteil aus dem PVC zu entweichen. Dies wird aus Gesundheits- und Umweltgründen zunehmend abgelehnt oder behördlich untersagt. PVC wird mittels Spritzdüse bei ca 40-65 Grad C in flüssiger Form aufgetragen.

Wird statt PVC anderes Kunststoffmaterial wie zum Beispiel TPE verwendet, so wird das Kunststoffmaterial für derartige Dichtungen zunächst in geeigneter Weise plastifiziert und dann die Schmelze mit Hilfe einer geeigneten Vorrichtung in das Innere einer Kappe appliziert. Aus EP 1 527 864 ist eine derartige Vorrichtung bekannt geworden. Sie weist einen äußeren hülsenförmigen höhenbeweglichen Stempel auf, in dem sich ein innerer höhenbeweglicher Stempel befindet. Auf der Außenseite des äußeren Stempels gleitet ein Ringschieber, der bei der Verstellung in eine untere Position ein Extrudat von Spritzdüsen abtrennt, das in den Ringraum zwischen einem die Düsenöffnungen aufweisenden Ring und dem äußeren Stempel ausgebracht wird. Das Extrudat wird mit Hilfe des äußeren Schiebers an den inneren Boden der Kappe angedrückt, wobei der Ringschieber und der innere Stempel auf dem Boden aufsitzen und dadurch einen ringförmigen Formhohlraum begrenzen. Nachteilig bei der bekannten Vorrichtung sind die ungenaue Portionierung des Dichtungsmaterials, die nicht gleichmäßige Ringform des Extrudats sowie das Problem den äußeren Schieber in dem heißen Umfeld zu kühlen.

EP 0 499 108 A1 und EP 0 462 513 A1 beschreiben jeweils ein Verfahren zum Auftragen einer plastifizierten ringförmig ausgebildeten Masse auf einer Fläche. Bei diesem Verfahren wird die plastifizierte Masse zunächst in einen vertikal verlaufenden Ringspalt oberhalb der Fläche gepresst. Eine Stempelhülse taucht oberhalb der plastifizierten Masse in den Ringspalt ein und presst die Schmelzmasse gegen die am unteren Ende des Ringspalts angeordnete Fläche.

Aus der US 2 009 127 744 ist das Aufbringen einer ringförmigen plastifizierten Masse auf einer Flächebekannt, wobie die ringförme plastifizierte Masse aus einem Ringspalt mit veränderticher Spaltbreite heransgepresst wird.

Alle Lösungsansätze wie auch die oben beschriebenen Patent anmeldungen bergen die große Gefahr, dass die heiße Dichtungsmasse an nicht kalten Oberflächen anhaftet. Dieser Effekt ist an sich bekannt und wird üblicherweise durch Kühlung der Oberflächen, an denen eine Anhaftung vermieden werden soll, annähernd beherrscht. Dieses Problem tritt auch bei den bekannten Applikatoren auf. Ursache ist die Unmöglichkeit, auf engstem Raum Temperaturdifferenzen von ca. 180° technisch zu realisieren.

Der Erfindung liegt daher die Aufgabe zugrunde, ein Verfahren zum ringförmigen Aufbringen einer Dichtungsmasse auf eine Fläche, insbesondere in eine Verschlusskappe für Behälter zu schaffen, mit dem wirksam die Dichtungsmasse ausgetragen werden kann, ohne dass es zu einer Anhaftung beziehungsweise Ziehfaden an Außenflächen des Applikators kommt. Diese Aufgabe wird durch die Merkmale der Patentansprüche 1 und 6 gelöst.

Vorteilhafte Ausgestaltungen der Erfindung sing in den Unterausprüchen offenbart.

Bei dem erfindungsgemäßen Verfahren wird die plastifizierte Dichtungsmasse ringförmig in einen temperierten Ringspalt mit veränderbarer Spaltbreite eingebracht. Durch rasche Verringerung der Spaltbreite zu null wird die Dichtungsmasse vollständig aus dem Ringspalt herausgepresst und zu einem ringförmigen, den Ringspalt radial innen oder außen umgebenden Gebilde geformt. Das ringförmige Gebilde kann unmittelbar auf die Fläche aufgebracht werden, indem es eine Strecke durch die Luft schiesst.

Die Dichtungsmasse oder Schmelze wird nach innen oder außen aus dem Ringspalt ausgepresst, d.h. die Wände des Ringspalts nähern sich annähernd senkrecht zur Auspressrichtung, wenn er zu Null reduziert wird. Somit wird unter Verringerung der Spaltbreite eine relative Verringerungsbewegung der Spaltwände quer zur Auspressrichtung verstanden. Bei einer vertikalen Bewegung einer Wand des Ringspalts wird die Spaltbreite vertikal verringert. Hier entspricht die Spaltbreite der vertikalen Dimension des Ringspalts.

Erfindungswesentlich ist, dass beim Auspressen der Dichtungsmasse aus dem Ringspalt die Anfangsgeschwindigkeit ausreichend hoch ist, dass es nicht zu partiellen Anhaftungen an den Austrittskanten des Ringspalts kommt. Bei gleichbleibender Geschwindigkeit der Verringerung der Spaltbreite nimmt die Austrittsgeschwindigkeit der Dichtungsmasse bekanntlich zu. Es ist daher auch möglich, bei laufender Querschnittsverengung eine Reduktion der Spaltbreitenveränderungsgeschwindigkeit zuzulassen solange die Austrittsgeschwindigkeit ausreichend hoch bleibt.

Erfindungswesentlich ist ferner, dass der Ringspalt beim Auspressvorgang zu null gemacht wird, um einen sauberen Abschluss des Schmelzaustritts zu erreichen.

Während des Auspressvorgangs aus dem Ringspalt wird die Zufuhr zum Ringspalt abgesperrt. Da der Absperrvorgang nicht plötzlich erfolgt, müssen Mittel vorgesehen werden, die ein Rückfließen der Schmelze aus dem Ringspalt verhindern, z.B. ein Rückschlagventil.

Es hat sich herausgestellt, dass als Folge der Beschleunigung der Schmelze Anhaftungen nicht mehr stattfinden. Es gibt eine Austrittsgeschwindigkeit, oberhalb derer Anhaftungen und Ziehfäden nicht mehr auftreten. Durch Veränderung der Schließgeschwindigkeit des Spaltes lässt sich nachweisen, dass unterhalb eines Mindestgeschwindigkeitswertes Anhaftungen und/oder Ziehfäden auftreten.

Bei dem erfindungsgemäßen Verfahren wird, wie schon erwähnt, vorzugsweise das aus dem Ringspalt ausgepresste ringförmige Gebilde unmittelbar auf einer Fläche z.B. auf dem Boden einer Verschlusskappe abgelegt. Um es in seine endgültige Form zu bringen, sieht eine Ausgestaltung der Erfindung vor, dass das ringförmige Gebilde anschließend durch ein kaltes ringförmiges Presswerkzeug gegen die Fläche, z.B. die Verschlusskappe gepresst und zu einem flachen Dichtring geformt wird.

Die Austrittsöffnung des Ringspalts kann radial nach innen oder nach außen gerichtet sein, auch die Orientierung des Ringspalts ist nicht wesentlich. Der Ringspalt kann in einer radialen Ebene liegen oder konisch verlaufen. Zum Erreichen des Ziels, Anhaftungen zu vermeiden, spielen diese Umstände keine Rolle.

Bei dem erfindungsgemäßen Verfahren hat sich gezeigt, dass die Oberflächenspannung der Schmelze dazu führt, dass etwa nacheilende Haare nachgezogen und in das ringförmige Gebilde aus Schmelzmaterial aufgesogen werdend. Anhaftende Haare treten nicht auf.

Nach dem Auspressen des ringförmigen Gebildes aus dem Ringspalt kann geschehen, dass das ringförmige Gebilde über einen feinen Film noch mit den den Ringspalt bildenden Teilen eines Applikators verbunden ist. Falls das auf der Fläche abgelegte ringförmige Gebilde keine ausreichende Haftung auf der Fläche hat, kann es bei der Entfernung vom Ringspalt zu einer unerwünschten Verformung des Gebildes kommen. Daher sieht eine Ausgestaltung der Erfindung vor, dass das Austrittsende des Ringspalts zur Fläche so positioniert ist, dass das ringförmige Gebilde die Fläche kontaktiert, wenn aus dem Ringspalt herausgepresst ist. Durch anschließendes Absenken der temperierten Fläche wird ein möglicherweise zwischen geschlossenem Ringspalt und dem ringförmigen Gebilde noch vorhandener Film abgerissen. Die Fläche wird vorzugsweise mit einem Haftmittel versehen und ausreichend temperiert, so dass zwischen dem ringförmigen Gebilde und der Fläche eine ausreichende Adhäsion stattfindet, die ermöglicht, dass bei einem Entfernen der Fläche vom Ringspalt ein vorhandener Film reißt, ohne dass es zu einer unerwünschten Verformung des ringförmigen Gebildes kommt. Das ringförmige Gebilde ist gleichmäßig mit der Fläche in Kontakt, wodurch beim anschließenden Anpressen an die Fläche ein gleichmäßiger Dichtungsring geschaffen ist.

Das erfindungsgemäße Verfahren ist insbesondere anzuwenden bei Gefäßdeckeln, die mit einem inneren Dichtungsring versehen werden. Häufig haben derartige Deckel radial nach innen weisende Nocken. Die endgültige Kontaktierung eines derartigen Dichtrings mit der Deckelinnenfläche erfolgt durch Pressen mit Hilfe eines geeigneten Presswerkzeugs, das die Dichtungsmasse gegen den temperierten Deckel anpresst, so dass eine ausreichende Haftverbindung stattfindet. Bei Nockendeckeln ist jedoch dieser Vorgang relativ schwierig zu realisieren, zumindest mit einem einzigen Presswerkzeug bzw. in einem Vorgang. Es ist daher bereits bekannt, die Dichtungsmasse in einen Rohling einzulegen und zu verpressen, und den Deckelrand und die Nocken im Nachhinein fertig zu formen. Eine Ausgestaltung der Erfindung bei einem Nockendeckel mit einer ringförmigen Vertiefung an der Innenseite des Bodens des Nockendeckels zur Aufnahme des Dichtungsrings sieht vor, dass ein einziger ringförmiger Pressstempel verwendet wird. Das Volumen des ringförmigen Gebildes wird so bemessen, dass beim Pressvorgang die Dichtungsmasse zumindest zur Außenseite der Vertiefung wulstförmig über den Rand der Vertiefung hinaus verformt wird. Die hierbei aufzuwendende Verformungsarbeit erzeugt einen ausreichenden Druck, der zwischen der Wandung der Vertiefung und der Dichtungsmasse eine ausreichende innige Verbindung bewirkt.

Zur Durchführung des erfindungsgemäßen Verfahrens wird gemäß Patentanspruch 10 vorgeschlagen, einen äußeren und einen inneren zylindrischen Stempel in einem Applikator vorzusehen, wobei letzterer Stempel in einer zylindrischen Ausnehmung des äußeren Stempels konzentrisch aufgenommen ist. Die Stempel sind relativ zueinander axial bewegbar. Hierzu dient eine geeignete Verstellvorrichtung. Zwischen den Stempeln ist ein nach innen oder außen offener Ringspalt gebildet, dessen Spaltbreite zwischen einer Ausgangsspaltbreite und einer Spaltbreite null veränderbar ist. Die Veränderung der Spaltbreite erfolgt in Richtung der Verstellung des mindestens einen Stempels. Die Wände des Ringspalts verlaufen vorzugsweise parallel zueinander.

Eine Zuführung für plastifizierte Dichtungsmasse von einer Dosiervorrichtung in einen der Stempel ist mit dem Ringspalt verbunden, wenn dieser in seiner Ausgangsposition ist. Die Zuführung zum Ringspalt ist gleichmäßig über diesen verteilt, z.B. über kleine, gleichmäßig verteilte Öffnungen zum Ringspalt. Die Kanäle zu den Öffnungen und diese selbst sorgen für symmetrische hydraulische Verhältnisse und damit zur gleichmäßigen Verteilung der Schmelze im Ringspalt. Der Strömungsquerschnitt der Kanäle zum Ringspalt in seiner Gesamtheit ist kleiner als der eines Zuführkanals zu den Kanälen bzw. Öffnungen. Bei Verringerung der Spaltbreite wird ein Zurückströmen der Schmelze in den Versorgungskanal durch vorgeschaltete geeignete Maßnahmen wie z.B. einem Rückschlagventil verhindert. In einer Ausgestaltung der Erfindung ist der innere Stempel am unteren Ende mit einem radialen Flansch versehen, der mit dem äußeren Stempel den Ringspalt bildet. Die Zuführung für plastifiziertes Material kann einen axialen Kanal im inneren Stempel aufweisen, der mit einer Reihe radialer Kanäle verbunden ist, die ihrerseits in den Ringspalt münden, wenn dieser seine Ausgangsspaltbreite hat.

Je nach Beschaffenheit und Viskosität des Dichtungsmaterials kann es geschehen, dass es aus dem offenen Ringspalt bereits heraustritt, bevor der Auspressvorgang zur Erzeugung des ringförmigen Gebildes erfolgt. Daher sieht eine Ausgestaltung der Erfindung vor, dass zwischen dem Ringspalt und der Zuführung ein Ringkanal oder eine ringförmige Erweiterung geformt ist, in dem der sich plastifiziertes Dichtungsmaterial sammelt. Vorzugsweise ist der Ringkanal außen im inneren Stempel geformt. Dieser Ringkanal dient der Zurückhaltung auch dünnflüssigerer Schmelze, bevor diese aus dem Ringspalt ausgestoßen wird. Nach dem Ausstoßen der Schmelze über den sich schließenden Ringspalt verbleibt eine Restmenge der Schmelze in dem Ringkanal. Es hat sich gezeigt, dass mit dieser Maßnahme verhindert werden kann, dass auch dünnflüssigere Schmelzen aus dem Ringspalt heraus laufen, bevor dieser geschlossen wird.

Ein Ausführungsbeispiel der Erfindung wird nachfolgend anhand von Zeichnungen näher erläutert.
- Fig. 1: zeigt äußerst schematisch einen Schnitt durch einen Applikator zum Einbringung einer Dichtungsmasse in eine Verschlusskappe für einen Behälter im Schnitt dargestellt,
- Fig. 2: zeigt den Applikator nach Figur 1 nach beendetem Einbringen der Dichtungsmasse,
- Fig. 3: zeigt die abschließende Verformung der Dichtungsmasse in der Verschlusskappe.
- Fig. 4: zeigt eine ähnliche Darstellung wie Fig. 1 oder 2 mit einem zusätzlichen Ringkanal.
- Fig. 5: zeigt die Darstellung nach Fig. 4 nach dem Schließen des Ringspalts.
- Fig. 6: zeigt das Eintragen der Schmelze in den Ringspalt vor dem Schließen des Ringspalts zur Ausbildung des ringförmigen Gebildes.
- Fig. 7: zeigt im Schnitt schematisch ein Werkzeug zum Einformen des ringförmigen Gebildes nach der Erfindung in einen Nockendeckel.
- Fig. 8: zeigt die Darstellung nach Fig. 7 während des Pressvorgangs.

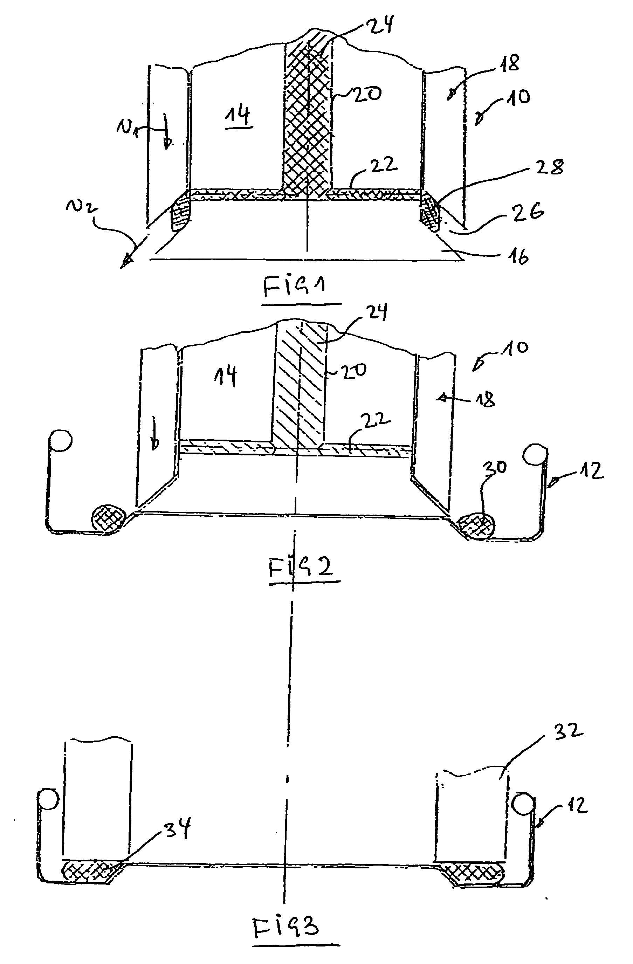

In den Figuren 1 und 2 ist ein Applikator 10 für das Einbringen einer Dichtungsmasse in eine Verschlusskappe 12 (Figur 2) äußerst schematisch dargestellt. Er weist einen inneren Stempel 14 auf, der am unteren freien Ende einen konischen Flansch 16 hat. Der innere Stempel 14 ist von einem äußeren Stempel 18 ringförmig umgeben. Die zylindrischen Stempel 14, 18 sind konzentrisch und mit Hilfe einer nicht gezeigten Verstellvorrichtung relativ axial zueinander beweglich. In gezeigtem Ausführungsbeispiel ist der äußere Stempel 18 relativ zum inneren Stempel 14 beweglich.

Im inneren Stempel 14 befindet sich ein axialer Kanal 20, der mit einem nicht gezeigten Extruder oder ein anderen Einrichtung zur Herstellung einer Schmelze aus Dichtungsmaterial verbunden ist. Der Kanal 20 ist mit mehreren, gleichmäßig verteilten radialen Kanälen 22 am unteren Ende verbunden. Der Gesamtquerschnitt der Kanäle 22 oder Bohrungen ist klein und kleiner als der des axialen Kanals 20. Damit wird die gleichmäßige Verteilung der Schmelze im Ringspalt gewährleistet. In den Kanälen 20, 22 befindet sich Schmelze 24.

Wie aus Figur 1 zu erkennen, kann zwischen innerem und äußerem Stempel 14, 18 ein konischer Ringspalt 26 gebildet werden, der weiter nach innen und oben zylindrisch ist. Seine Wände sind parallel und sein Boden wird von der Außenseite des inneren Stempels 14 gebildet. Figur 1 zeigt die Ausgangsspaltbreite, bei der die radialen Kanäle 22 mit dem Ringspalt 26 in Verbindung stehen. Wie ferner in Figur 1 zu erkennen, wird durch einen entsprechenden Extrudier- oder Aufschmelzvorgang Schmelze z.B. aus TPE ringförmig in den Spalt 26 eingetragen, wie bei 28 angedeutet.

Zum Austragen der Schmelze 28 in die Verschlusskappe 12, wie dies in Figur 2 dargestellt ist, wird der Ringspalt 26 durch vertikale Verstellung des äußeren Stempels 18 mit der Geschwindigkeit V1 verringert bis auf die Spaltbreite null, wie in Figur 2 angedeutet. Bei letzterer liegen die Wände des Ringspalts satt aneinander. Die Schmelze 28 tritt mit der Geschwindigkeit V2 aus dem Ringspalt 26 aus, wodurch ein ringförmiges Gebilde 30 aus plastifizierter Dichtungsmasse gebildet wird. Um dieses Gebilde 30 in die Verschlusskappe 12 einzubringen, nähert sich die Anordnung aus innerem und äußerem Stempel 14, 18 der Verschlusskappe 12, wie das in Figur 2 dargestellt ist. Ein weiteres Werkzeug, um das aus dem Ringspalt 26 austretende ringförmige Gebilde 30 in die Verschlusskappe 12 einzubringen, ist daher nicht erforderlich. Nach Formung des ringförmigen Gebildes liegt es auf den Boden der Kappe (Fig. 2). Statt einer Kappe kann auch eine andere Fläche mit einer ringförmigen Dichtung versehen werden.

Wesentlich bei dem beschriebenen Vorgang ist jedoch, dass die Anfangsgeschwindigkeit V1 bzw. die Anfangsaustrittsgeschwindigkeit V2 einen Mindestwert aufweist und hält, um ein Anhaften von Schmelze an den Außenkanten des Ringspaltes 26 zu verhindern. Dies wird bei der gewählten Mindestaustrittsgeschwindigkeit V2 zuverlässig erreicht.

Beim Auspressen des ringförmigen Gebildes 30 kann geschehen, dass es noch über einen feinen Film mit dem Applikator verbunden ist. Liegt das ringförmige Gebilde mit unzureichender Haftung am Deckelinnenboden, kann es bei Entfernung vom Ringspalt geschehen, dass das ringförmige Gebilde eine Verformung erleidet. Es ist daher vorteilhaft, wenn mit dem Auspressen und Formen des ringförmigen Gebildes 30 dieser unmittelbar mit dem Deckel in Kontakt tritt. Der Deckel ist, wie an sich bekannt, mit einem geeigneten Haftmittel versehen. Außerdem wird er in geeigneter Weise auf eine erforderliche Temperatur gebracht. Die gleichmäßige Anlage des ringförmigen Gebildes 30 am Deckel unmittelbar nach der Formung des ringförmigen Gebildes bewirkt eine ausreichende Haftung zwischen dem ringförmigen Gebilde 30 und der zugeordneten Deckelfläche, so dass beim anschließenden Absenken des Deckels 12 gegenüber dem Applikatior 10 der gegebenenfalls noch vorhandene Film abreißt, ohne dass es zu einer unerwünschten Deformation des ringförmigen Gebildes 30 kommt.

Die gewählte geometrische Form des Applikators 10 bzw. des konischen Ringspalts ergibt sich im gezeigten Fall durch den gezeigten sogenannten Nockendeckel 12. Für andere Verschlusskappen und andere Verteilungen der Dichtungsmasse können andere Orientierungen des Ringspalts 26 von Vorteil sein.

In Figur 3 ist gezeigt, wie mit Hilfe eines ringförmigen Stempels 32, der gekühlt ist, das ringförmige Gebilde 30 zu einem flachen planen Dichtungsring 34 geformt wird. Während des beschriebenen Aufbringevorgangs sind die Stempel 14, 18 nach Fig. 1 und 2 ausreichend temperiert, damit die Schmelze fließfähig bleibt.

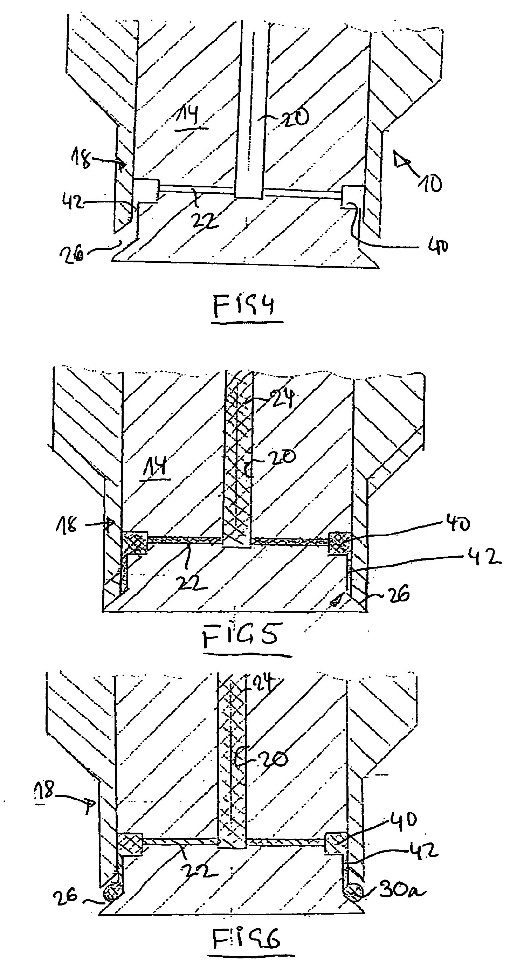

Der in den Figuren 4 bis 6 dargestellte Applikator gleicht im Wesentlichen dem nach den Figuren 1 bis 3. Es sind daher gleiche Teile mit gleichen Bezugszeichen versehen. Die Besonderheit in den Figuren 4 bis 6 besteht in einem im Querschnitt rechteckigen Ringkanal 40, der außen in den Stempel 14 eingeformt ist und mit den Bohrungen 22 in Verbindung ist. Der Ringkanal 40 ist zum zylindrischen Spalt 42 zwischen den Stempeln 14, 18 offen, der nach unten zum konischen Ringspalt 26 geführt ist. Aus Fig. 5 wird deutlich, dass Ringkanal 40 und zylindrischer Spalt 42 mit plastifizierter Masse gefüllt sind, wenn der konische Ringspalt geschlossen ist. In Fig. 6 ist der Ringspalt 26 geöffnet und man erkennt die dosiert austretende Schmelze 30a, die jedoch aufgrund der Wirkung des Ringkanals 40 nicht "herausleckt", sondern im Ringspalt 26 verbleibt. Anschließend erfolgt das Auspressen des Dichtungsmaterials, wie dies anhand der Figuren 1 und 2 bereits erläutert wurde. Nach dem Auspressen ergibt sich ein Zustand, wie er in Fig. 5 zu erkennen ist. Dadurch, dass die neu zugeführte Schmelze zunächst die Restschmelze aus dem Ringkanal 40 ausschieben muss, entsteht im Ringspalt 26 eine günstige Verteilung, die das ungewollte Austreten von Schmelze aus dem Ringspalt vor dem Schließen des Ringspalts auch dann verhindert, wenn die Schmelze relativ dünnflüssig ist.

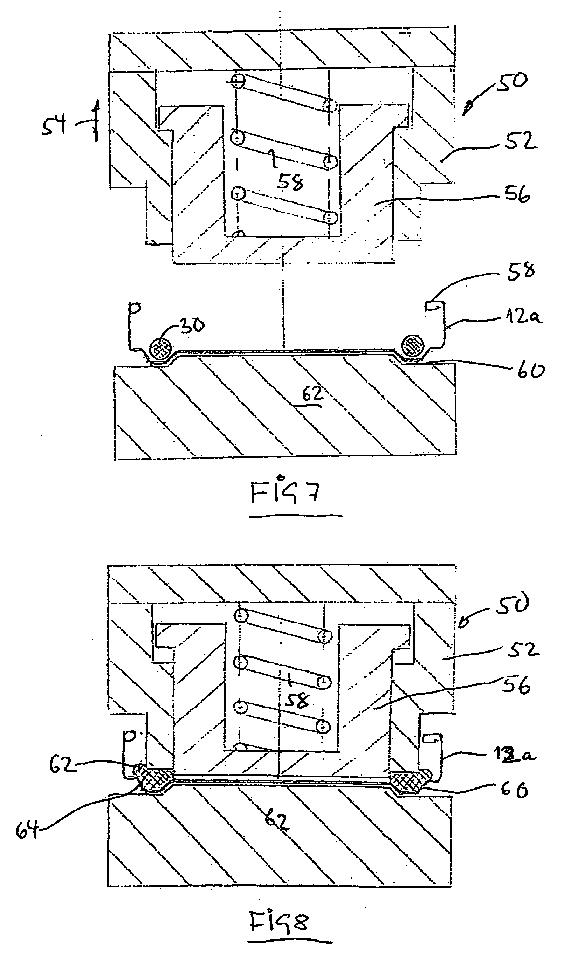

In den Figuren 7 und 8 ist ein Werkzeug 50 dargestellt, in Abwandlung zum Werkzeug 32 nach Fig. 3. Das Werkzeug 50 weist einen äußeren ringförmigen dritten Stempel 52 auf, der in Richtung des Doppelpfeils 54 von einer nicht gezeigten Betätigungsvorrichtung vertikal bewegbar ist. Ein innerer vierter Stempel 56 stützt sich über eine Feder 58 am äußeren Stempel 54 ab. In Fig. 7 und 8 erkennt man ferner einen Nockendeckel 12a mit Nocken 58 sowie einer ringförmigen Vertiefung 60, in welche das ringförmige Gebilde 30 nach Fig. 2 abgelegt wird. Der Deckel 12a ruht auf einer Unterlage 63. Das Werkzeug 50 dient zum Anpressen des ringförmigen Gebildes 30 an den Deckel 12a in der Vertiefung 60. Die Pressfläche des Stempels 52 ist zur ringförmigen Vertiefung 60 ausgerichtet, wobei sein Außendurchmesser etwas geringer ist als der maximale Außendurchmesser der Vertiefung 60. Beim Pressvorgang presst der Stempel 52 das ringförmige Gebilde 30 in die Vertiefung 60, wobei ein radiales Verformen nach innen über den Vertiefungsrand hinaus durch den inneren Stempel 56 begrenzt bzw. verhindert wird. Auf der Außenseite erfolgt beim Pressvorgang eine radiale Wulstbildung, wie bei 62 angedeutet. Das Volumen des ringförmigen Gebildes 30 relativ zum Volumen der Vertiefung 60 ist so gewählt, dass das Material wulstförmig nach außen über den Rand der Vertiefung hinaus verformt wird. Da das Dichtungsmaterial äußerst viskos ist, bewirkt die Verformungsarbeit, die für den beschriebenen Vorgang aufgebracht werden muss, einen ausreichenden Pressdruck, wodurch der sich bildende Dichtring 64 mit der gesamten Wandung der Vertiefung 62 in eine ausreichende Haftungsverbindung gebracht wird.

Bei dem beschriebenen Betrieb des Applikators 10 kann dieser mit seinen Werkzeugen insgesamt eine ausreichend hohe Temperatur aufweisen. Das Werkzeug 50, das an einem anderen Ort angeordnet sein kann, kann Raumtemperatur haben oder gekühlt sein.

Es ist denkbar, ein ringförmiges Gebilde wie das mit 28 bezeichnete auch nach innen zu formen, d.h. die Öffnung des Ringspalts 26 nicht nach außen, wie in den Figuren 1 und 2 vorzusehen, sondern nach innen gerichtet, z.B. ein Aufbringen einer Dichtung auf eine Welle (nicht gezeigt). Der innere Stempel 14 wäre dann zumindest teilweise hohl und die Zuführung 20, 22 könnte im äußeren Stempel 18 liegen.

## Patentansprüche

1. Verfahren zum Aufbringen einer Dichtungsmasse auf eine Fläche, bei dem aus plastifizierter Dichtungsmasse ein ringförmiges Gebilde geformt und anschließend auf die Fläche aufgetragen wird, **dadurch gekennzeichnet, dass** die plastifizierte Dichtungsmasse ringförmig in einen zwischen einem äußeren Stempel (18) und einem in einer zylindrischen Ausnehmung des äußeren Stempels (18) aufgenommenen konzentrischen inneren Stempel (14) gebildeten temperierten, nach innen oder außen offenen Ringspalt (26) mit durch eine relative Axialbewegung der Stempel (14, 18) veränderbarer Spaltbreite eingebracht wird, durch rasche Verringerung der Spaltbreite zu null die Dichtungsmasse vollständig aus dem Ringspalt (26) herausgepresst und zum ringförmigen Gebilde (30) geformt und danach auf der Fläche abgelegt wird, wobei die Spaltbreite mit so großer Geschwindigkeit verringert und die Dichtungsmasse mit so hoher Geschwindigkeit ausgepresst wird, dass eine Anhaftung der Schmelze an Spaltkanten sowie an den Ringspalt (26) benachbarten Flächen vermieden wird.

2. Verfahren nach Anspruch 1, **dadurch gekennzeichnet, dass** das ringförmige Gebilde (30), unmittelbar aus dem Ringspalt (26) entstehend, auf der Fläche abgelegt wird und/oder dass das ringförmige Gebilde (30) anschließend durch ein kaltes ringförmiges Presswerkzeug gegen die Fläche gepresst und zu einem flachen Dichtring (34) mit guter Dichtfläche geformt wird und/oder dass die plastifizierte Dichtungsmasse radial nach außen oder innen aus dem Ringspalt (26) gepresst wird.

3. Verfahren nach Anspruch 2, **dadurch gekennzeichnet, dass** die plastifizierte Dichtungsmasse schräg nach unten aus dem Ringspalt (26) ausgepresst wird.

4. Verfahren nach einem der Ansprüche 1 bis 3, **dadurch gekennzeichnet, dass** das ringförmige Gebilde (30) in eine Verschlusskappe für Behälter eingebracht wird.

5. Verfahren nach einem der Ansprüche 1 bis 4, **dadurch gekennzeichnet, dass** das Austrittsende des Ringspalts (26) zur Fläche so positioniert ist, dass das ringförmige Gebilde (30) die Fläche kontaktiert, sobald es aus dem Ringspalt (26) herausgepresst ist und durch anschließendes Absenken der temperierten Fläche ein möglicherweise zwischen geschlossenem Ringspalt (26) und ringförmigem Gebilde (30) noch vorhandener Film abgerissen wird oder, dass das ringförmige Gebilde (30) auf der Innenseite eines Bodens eines Nockendeckels (12) abgelegt und anschließend mit einem Presswerkzeug gegen die Vertiefung gepresst wird, wobei ein einziger ringförmiger Pressstempel (32) verwendet wird und das Volumen des ringförmigen Gebildes (30) relativ zum Volumen der Vertiefung so bemessen wird, dass beim Pressvorgang die Dichtungsmasse zumindest zur Außenseite der Vertiefung hin wulstförmig über den Rand der Vertiefung hinaus verformt wird.

6. Vorrichtung zum Aufbringen einer Dichtungsmasse auf eine Fläche, insbesondere in eine Verschlusskappe für Behälter, aufweisend:
• einen äußeren Stempel (18) und einen in einer zylindrischen Ausnehmung des äußeren Stempels (18) aufgenommenen konzentrischen inneren Stempel (14), die relativ zueinander bewegbar sind, **gekennzeichnet durch**
• einen Ringspalt (26) zwischen den Stempeln (14, 18), der nach außen oder innen offen ist und von dem zumindest ein nach außen oder innen mündender Abschnitt bei einer relativen Axialbewegung der Stempel (14, 18) zwischen einer Ausgangsspaltbreite und einer Spaltbreite null in Bewegungsrichtung der Stempel veränderbar ist,
• eine Zuführung für plastifizierte Dichtungsmasse innerhalb eines Stempels, die zumindest in der Ausgangsspaltbreite mit dem Ringspalt (26) verbunden ist,
• Mittel, die ein Rückfließen der Schmelze aus dem Ringspalt verhindern,
• Verstellmittel für mindestens einen der Stempel zur Veränderung der Spaltbreite des Ringspalts (26), wobei die Verstellmittel dazu ausgebildet sind, die Spaltbreite mit so großer Geschwindigkeit zu verringern und die Dichtungsmasse mit so hoher Geschwindigkeit auszupressen, dass eine Anhaftung der Schmelze an Spaltkanten sowie an den Ringspalt benachbarten Flächen vermieden wird.

7. Vorrichtung nach Anspruch 6, **dadurch gekennzeichnet, dass** die Zuführung gleichmäßig über den Umfang des Ringspalts (26) verteilte Löcher mit dem Ringspalt verbunden ist.

8. Vorrichtung nach Anspruch 6, **dadurch gekennzeichnet, dass** äußerer und innerer Stempel (18, 14) mit Hilfe einer weiteren Verstellvorrichtung als Einheit gemeinsam verstellbar sind.

9. Vorrichtung nach Anspruch 6 oder 7, **dadurch gekennzeichnet, dass** der innere Stempel (14) am unteren freien Ende einen radialen konischen Flansch (16) aufweist, der mit dem äußeren Stempel (18) den Ringspalt (26) bildet.

10. Vorrichtung nach Anspruch 9, **dadurch gekennzeichnet, dass** die Zuführung einen axialen Kanal (20) am inneren Stempel (14) und mindestens einen damit verbundenen radialen Kanal (22) aufweist, der in den Ringspalt (26) mündet, wenn dieser seine Ausgangsspaltbreite aufweist.

11. Vorrichtung nach Anspruch 6 oder 9, **dadurch gekennzeichnet, dass** der Ringspalt (26) im radial inneren oder äußeren Bereich konisch ist und ein Gefälle nach außen aufweist.

12. Vorrichtung nach Anspruch 6, **dadurch gekennzeichnet, dass** die Wände des Ringspalts (26) parallel sind.

13. Vorrichtung nach einem der Ansprüche 6 bis 12, **dadurch gekennzeichnet, dass** die Zuführung(en) in den Boden des Ringspalts mündet und/oder dass zwischen dem Ringspalt (26, 42) und der Zuführung (22, 20) ein Ringkanal (40) oder eine ringförmige Erweiterung geformt ist, in dem sich plastifiziertes Dichtungsmaterial sammelt.

14. Vorrichtung nach Anspruch 10 und 13, **dadurch gekennzeichnet, dass** der Ringkanal (40) außen in dem inneren Stempel (14) geformt ist.

15. Vorrichtung nach einem der Ansprüche 10 bis 14, **dadurch gekennzeichnet, dass** ein getrenntes Werkzeug (50) mit einem dritten ringförmigen Stempel (52) und einem von diesem umgebenden vierten Stempel (56) vorgesehen ist, wobei die ringförmige Pressfläche des dritten Stempels (52) t zu einer ringförmigen Vertiefung (60) an der Innenseite eines Bodens eines Nockendeckels (12a) so ausgerichtet ist, derart, dass beim Pressvorgang Dichtungsmasse zur Außenseite der Vertiefung wulstförmig über den Rand der Vertiefung (60) hinaus verformbar ist, wobei der innere vierte Stempel (56) eine Begrenzung bildet.

## Claims

1. A method for applying a sealing compound to a surface, in which an annular formation is formed from a plasticized sealing compound and is then applied to the surface, **characterized in that** the plasticized sealing compound is incorporated annularly in a tempered annular gap (26) open towards the inside or outside and formed between an outer punch (18) and a concentric inner punch (14) received in a cylindrical recess of the outer punch (18) with a gap width that is changeable through a relative axial movement of the punches (14, 18), the sealing compound is pressed completely out of the annular gap (26) through rapid reduction of the gap width to zero and formed into the annular formation (30) and then placed on the surface, wherein the gap width is reduced at such a great speed and the sealing compound is pressed out at such a high speed that an adherence of the molten mass to the gap edges as well as to the surfaces neighboring the annular gap (26) is avoided.

2. The method according to claim 1, **characterized in that** the annular formation (30), emerging directly from the annular gap (26), is placed on the surface and/or that the annular formation (30) is then pressed through a cold annular pressing tool against the surface and shaped into a flat sealing ring (34) with a good sealing surface and/or that the plasticized sealing compound is pressed out of the annular gap (26) radially outward or inward.

3. The method according to claim 2, **characterized in that** the plasticized sealing compound is pressed transversely downwards out of the annular gap (26).

4. The method according to one of claims 1 to 3, **characterized in that** the annular formation (30) is incorporated into a sealing cap for containers.

5. The method according to one of claims 1 to 4, **characterized in that** the exit end of the annular gap (26) is positioned with respect to the surface such that the annular formation (30) contacts the surface as soon as it is pressed out of the annular gap (26) and a film potentially still present between the closed annular gap (26) and the annular formation (30) is torn off through the subsequent lowering of the tempered surface, or **in that** the annular formation (30) is placed on the inside of the floor of a cam cover (12) and subsequently pressed with a pressing tool against the recess, wherein a single annular pressing punch (32) is used and the volume of the annular formation (30) is measured relative to the volume of the recess such that during the pressing process the sealing compound is deformed at least towards the outside of the recess in a bulge-like manner over the edge of the recess.

6. A device for applying a sealing compound to a surface, in particular into a sealing cap for containers, having:
• an outer punch (18) and a concentric inner punch (14) received in a cylindrical recess of the outer punch (18), which are moveable relative to each other, **characterized by**
• an annular gap (26) between the punches (14, 18), which is open towards the outside or inside and of which at least one section opening outwards or inwards in the case of a relative axial movement of the punches (14, 18) is changeable between an initial gap width and a gap width of zero in the direction of movement of the punches,
• a feed for a plasticized sealing compound within a punch, which is connected with the annular gap (26) at least in the initial gap width,
• means that prevent a backflow of the molten mass from the annular gap,
• adjusting means for at least one of the punches for changing the gap width of the annular gap (26), wherein the adjusting means are designed to reduce the gap width at such a high speed and to press the sealing compound at such a high speed that an adherence of the molten mass on the sealing edges as well as on surfaces neighboring the annular gap is prevented.

7. The device according to claim 6, **characterized in that** the feed is connected with the annular gap via holes distributed evenly over the periphery of the annular gap (26).

8. The device according to claim 6, **characterized in that** the outer and inner punch (18, 14) are adjustable together as one unit with the help of a further adjustment device.

9. The device according to claim 6 or 7, **characterized in that** the inner punch (14) has on the lower free end a radial conical flange (16), which forms the annular gap (26) with the outer punch (18).

10. The device according to claim 9, **characterized in that** the feed has an axial channel (20) on the inner punch (20) and at least one radial channel (22) connected with it, which opens into the annular gap (26) when it has its initial gap width.

11. The device according to claim 6 or 9, **characterized in that** the annular gap (26) is conical in the radial inner or outer area and has an outward slope.

12. The device according to claim 6, **characterized in that** the walls of the annular gap (26) are parallel.

13. The device according to one of claims 6 to 12, **characterized in that** the feed(s) open into the bottom of the annular gap and/or that an annular channel (40) or an annular extension is formed between the annular gap (26, 42) and the feed (22, 20), in which plasticized sealing material collects.

14. The device according to claims 10 and 13, **characterized in that** the annular channel (40) is formed outside on the inner punch (14).

15. The device according to one of claims 10 to 14, **characterized in that** a separate tool (50) is provided with a third annular punch (52) and a fourth punch (56) surrounded by it, wherein the annular pressing surface of the third punch (52) is aligned with an annular recess (60) on the inside of the bottom of a cam cover (12a) such that during the pressing process the sealing compound is deformable towards the outside of the recess in a bulge-like manner over the edge of the recess (60), wherein the inner fourth punch (56) forms a delimitation.

## Revendications

1. Procédé permettant d'appliquer une masse d'étanchéité sur une surface, selon lequel un produit annulaire est formé à partir d'une masse d'étanchéité plastifiée et est ensuite appliqué sur la surface, **caractérisé en ce que** la masse d'étanchéité plastifiée est insérée de manière annulaire dans une fente annulaire (26) thermorégulée, ouverte vers l'intérieur ou l'extérieur, formée entre un piston extérieur (18) et un piston intérieur (14) concentrique reçu dans un évidement cylindrique du piston extérieur (18), et possédant une largeur de fente modifiable par un déplacement axial relatif des pistons (14, 18), **en ce que** la masse d'étanchéité est exprimée entièrement hors de la fente annulaire (26) par une diminution rapide à zéro de la largeur de fente et formée pour obtenir le produit annulaire (30) et ensuite déposée sur la surface, la largeur de fente étant diminuée à une telle vitesse et la masse d'étanchéité exprimée à une telle vitesse qu'une adhérence de la masse fondue sur des bords de la fente ainsi que sur des surfaces adjacentes à la fente annulaire (26) est empêchée.

2. Procédé selon la revendication 1, **caractérisé en ce que** le produit annulaire (30) est déposé sur la surface directement à sa naissance de la fente annulaire (26) et/ou **en ce que** le produit annulaire (30) est ensuite pressé contre la surface par un outil de pressage annulaire froid et est formé en une bague d'étanchéité (34) plate avec une bonne surface d'étanchéité et/ou **en ce que** la masse d'étanchéité plastifiée est pressée hors de la fente annulaire (26) de manière radiale vers l'extérieur ou l'intérieur.

3. Procédé selon la revendication 2, **caractérisé en ce que** la masse d'étanchéité plastifiée est exprimée hors de la fente annulaire (26) de manière oblique vers le bas.

4. Procédé selon l'une des revendications 1 à 3, **caractérisé en ce que** le produit annulaire (30) est inséré dans un bouchon de fermeture pour contenant.

5. Procédé selon l'une des revendications 1 à 4, **caractérisé en ce que** l'extrémité de sortie de la fente annulaire (26) est positionnée par rapport à la surface de telle manière que le produit annulaire (30) touche la surface dès qu'il est exprimé hors de la fente annulaire (26) et un film éventuellement encore présent entre la fente annulaire (26) fermée et le produit annulaire (30) est arraché par la descente subséquente de la surface thermorégulée, ou **en ce que** le produit annulaire (30) est déposé sur le côté intérieur d'un fond d'un couvercle twist off (12) puis pressé contre l'enfoncement avec un outil de pressage, un unique piston de presse (32) annulaire étant utilisé et le volume du produit annulaire (30) étant dimensionné par rapport au volume de l'enfoncement de telle manière que, lors du procédé de pressage, la masse d'étanchéité est déformée de manière torique par-dessus le bord de l'enfoncement au moins en direction du côté extérieur de l'enfoncement.

6. Dispositif permettant d'appliquer une masse d'étanchéité sur une surface, en particulier dans un bouchon de fermeture pour contenant, comportant :
• un piston extérieur (18) et un piston intérieur (14) concentrique reçu dans un évidement cylindrique du piston extérieur (18), qui sont mobiles l'un par rapport à l'autre, **caractérisé par**
• une fente annulaire (26) entre les pistons (14, 18), qui est ouverte vers l'extérieur ou l'intérieur et dont au moins une section débouchant vers l'extérieur ou l'intérieur peut être modifiée lors d'un déplacement axial relatif des pistons (14, 18) entre une largeur de fente initiale et une largeur de fente égale à zéro dans la direction du déplacement des pistons,
• une alimentation pour masse d'étanchéité plastifiée à l'intérieur d'un piston, qui est reliée à la fente annulaire (26) au moins dans la largeur de fente initiale,
• des moyens, qui empêchent un retour de la masse fondue hors de la fente annulaire,
• des moyens de réglage pour au moins un des pistons pour modifier la largeur de fente de la fente annulaire (26), les moyens de réglage étant conçus pour diminuer la largeur de fente à une telle vitesse et pour exprimer la masse d'étanchéité à une telle vitesse qu'une adhérence de la masse fondue sur des bords de la fente ainsi que sur des surfaces adjacentes à la fente annulaire est empêchée.

7. Dispositif selon la revendication 6, **caractérisé en ce que** l'alimentation est reliée à la fente annulaire par des trous distribués de manière régulière sur la périphérie de la fente annulaire (26).

8. Dispositif selon la revendication 6, **caractérisé en ce que** les pistons extérieur et intérieur (18, 14) sont réglables ensemble en tant qu'unité à l'aide d'un autre dispositif de réglage.

9. Dispositif selon la revendication 6 ou 7, **caractérisé en ce que** le piston intérieur (14) comporte à son extrémité inférieure libre un collet (16) conique radial, qui forme la fente annulaire (26) avec le piston extérieur (18).

10. Dispositif selon la revendication 9, **caractérisé en ce que** l'alimentation comporte un canal axial (20) au niveau du piston intérieur (14) et au moins un canal radial (22) relié à celui-ci, qui débouche dans la fente annulaire (26), quand celle-ci possède sa largeur de fente initiale.

11. Dispositif selon la revendication 6 ou 9, **caractérisé en ce que** la fente annulaire (26) est conique dans sa zone radialement intérieure ou extérieure et présente une pente vers l'extérieur.

12. Dispositif selon la revendication 6, **caractérisé en ce que** les parois de la fente annulaire (26) sont parallèles.

13. Dispositif selon l'une des revendications 6 à 12, **caractérisé en ce que** la/les alimentation(s) débouche(nt) dans le fond de la fente annulaire et/ou **en ce que**, entre la fente annulaire (26, 42) et l'alimentation (22, 20), un canal annulaire (40) ou une extension annulaire est formé(e), dans lequel/laquelle du matériau d'étanchéité plastifié s'accumule.

14. Dispositif selon la revendication 10 et 13, **caractérisé en ce que** le canal annulaire (40) est formé dans le piston intérieur (14) à l'extérieur.

15. Dispositif selon l'une des revendications 10 à 14, **caractérisé en ce qu'**un outil séparé (50) doté d'un troisième piston annulaire (52) et d'un quatrième piston (56) entouré par celui-ci est prévu, la surface de pressage annulaire du troisième piston (52) est orientée par rapport à un enfoncement annulaire (60) sur le côté intérieur d'un fond d'un couvercle twist off (12a) de telle manière que lors du procédé de pressage, de la masse d'étanchéité peut être déformée de manière torique vers le côté extérieur de l'enfoncement par-dessus le bord de l'enfoncement (60), le quatrième piston intérieur (56) formant une limite.
